# EUROPÄISCHE PATENTANMELDUNG

(11) **EP 3 889 425 A1**
(43) Veröffentlichungstag der Anmeldung: **06.10.2021**
(21) Anmeldenummer: 20167766.3
(22) Anmeldetag: 02.04.2020
(51) Int. Cl.: F03D 15/10, F03D 80/70, F03D 80/80

(54) **GENERATOR-GETRIEBE-EINHEIT EINER WINDKRAFTANLAGE**

(71) Anmelder: Siemens Aktiengesellschaft, 80333 München (DE); Flender GmbH, 46395 Bocholt (DE)
(72) Erfinder: DEICKE, Matthias, 31311 Uetze / Schwüblingsen (DE); WINKLER, Güther, 4785 Haibach (AT); PLEHM, Sebastian, 10247 Berlin (DE)
(74) Vertreter: Michalski Hüttermann & Partner Patentanwälte mbB

(57) **Zusammenfassung**

Die Erfindung betrifft ein Funktionsbauteil (9) einer Generator-Getriebe-Einheit, insbesondere einer Windkraftanlage (1), das einen Generatorflanschfortsatz (11) und einen Getriebeflanschfortsatz (12) aufweist, die über ein Mittenteil (10) verbunden sind, wobei das Mittenteil (10) außerdem einen Stutzen (33) aufweist, der zumindest als Lagersitz geeignet ist, wobei das Funktionsbauteil (9), insbesondere das Mittenteil (10), zumindest einen Fortsatz (41) aufweist, der zur Aufnahme von zumindest Teilen einer Bremsanordnung (14) geeignet ist.

## Beschreibung

Die Erfindung betrifft ein Funktionsbauteil einer Generator-Getriebe-Einheit als auch eine Generator-Getriebe-Einheit und eine Windkraftanlage mit einer Generator-Getriebe-Einheit.

Viele Windkraftanlagen weisen einen Antriebsstrang mit Getriebe und Generator auf. Der Antriebsstrang weist unter anderem ein mechanisches Bremssystem auf, das auf der dem Generator abgewandten Seite angeordnet ist, wie dies der US 8 376 708 B2 zu entnehmen ist.

Derartige Anordnungen beanspruchen einen vergleichsweise großen axialen Bauraum.

Ausgehend davon liegt der Erfindung die Aufgabe zugrunde eine kompakte, leistungsfähige Generator-Getriebe-Einheit, insbesondere einer Windkraftanlage zu schaffen. Dabei soll insbesondere die axiale Baulänge der Generator-Getriebe-Einheit reduziert und kompaktiert werden. Der Antriebsstrang soll außerdem einen vergleichsweise hohen Wirkungsgrad aufweisen.

Die Lösung der erfindungsgemäßen Aufgabe gelingt durch ein Funktionsbauteil einer Generator-Getriebe-Einheit, insbesondere einer Windkraftanlage, das einen Generatorflanschfortsatz und einen Getriebeflanschfortsatz aufweist, die über ein Mittenteil verbunden sind, wobei das Mittenteil außerdem einen Stutzen aufweist, der zumindest als Lagersitz geeignet ist, wobei das Funktionsbauteil, insbesondere das Mittenteil zumindest einen Fortsatz aufweist, der zur Aufnahme von zumindest Teilen einer Bremsanordnung geeignet ist.

Die Lösung der erfindungsgemäßen Aufgabe gelingt auch durch eine Generator-Getriebe-Einheit einer Windkraftanlage mit einem Funktionsbauteil dieser Generator-Getriebe-Einheit nach Anspruch 1,
wobei der Generator einen Stator und einen Rotor aufweist, wobei das Getriebe als zwei- oder dreistufiges Planetenradgetriebe ausgebildet ist,
wobei das Funktionsbauteil, einen Generatorflanschfortsatz und einen Getriebeflanschfortsatz aufweist, die über ein Mittenteil verbunden sind,
wobei das Mittenteil außerdem einen Stutzen aufweist, der zumindest als Lagersitz geeignet ist,
wobei das Funktionsbauteil, insbesondere das Mittenteil, zumindest einen Fortsatz aufweist, an dem zumindest Teile einer Bremsanordnung befestigbar sind,
wobei sich Generatorflanschfortsatz und Getriebeflanschfortsatz in unterschiedliche Richtungen erstrecken,
wobei der Generatorflanschfortsatz zumindest einen Abschnitt eines Gehäuses des Generators bildet,
wobei der Getriebeflanschfortsatz zumindest einen Abschnitt eines Gehäuses des Getriebes bildet,
wobei im Stutzen eine Getriebeabtriebswelle gelagert ist, die mit dem Rotor des Generators drehmomentenübertragend verbunden ist.

Die Lösung der erfindungsgemäßen Aufgabe gelingt auch durch eine Windkraftanlage mit einer erfindungsgemäßen Generator-Getriebe-Einheit und mit einem erfindungsgemäßen Funktionsbauteil.

Durch das erfindungsgemäße Funktionsbauteil einer Generator-Getriebe-Einheit, insbesondere einer Windkraftanlage, kann der Antriebsstrang der Windkraftanlage axial verkürzt ausgeführt werden. Damit kann eine Gondel der Windkraftanlage kürzer ausgeführt werden oder der nunmehr vergleichsweise gewonnene Bauraum anderweitig genutzt werden.

Das Funktionsbauteil weist einen Generatorflanschfortsatz und einen Getriebeflanschfortsatz auf. Diese Flanschfortsätze sind für die Aufnahme zumindest von Teilen des Generators bzw. von Teilen des Getriebes geeignet.

Als Generator ist dabei eine rotatorische dynamoelektrische Maschine vorgesehen, vorzugsweise eine Asynchronmaschine oder Synchronmaschine. Als Getriebe sind dabei vorzugsweise zwei- oder dreistufige Planetenradgetriebe vorgesehen.

Der Generatorflanschfortsatz und der Getriebeflanschfortsatz sind in axial unterschiedliche Richtungen ausgerichtet.

Über ein Mittenteil sind Generatorflanschfortsatz und Getriebeflanschfortsatz verbunden, wobei das Mittenteil außerdem einen Stutzen aufweist, der zumindest als Lagersitz geeignet ist.

Das Funktionsbauteil, insbesondere das Mittenteil weist einen oder mehrere Fortsätze auf, die zur Aufnahme bzw. zum Befestigen von zumindest Teilen einer Bremsanordnung geeignet sind.

Vorzugsweise ist das Funktionsbauteil einstückig ausgeführt. Dadurch werden geschraubte Übergangsstellen im Kraft- und Momentenfluss auch zwischen den einzelnen oben erwähnten Komponenten, unter anderem wie Generatorflanschfortsatz und Getriebeflanschfortsatz vermieden.

Dazu ist das Funktionsbauteil als Gussteil ausgeführt oder aus Vollmaterial spanabhebend hergestellt.

In einer weiteren Ausführungsform sind zumindest Teile bzw. Abschnitte des Funktionsbauteils bearbeitet, also gefräst, geschliffen etc. Ebenso ist es möglich, zumindest einige Komponenten, wie Generatorflanschfortsatz, Getriebeflanschfortsatz, Stutzen und/oder die Fortsätze mittels Additive Manufactoring zumindest abschnittsweise stoffschlüssig zu ergänzen.

Dies gestattet auch die Schaffung zusätzlicher Formgebungen/ Rippen/Ausnehmungen, die einer Versteifung des Funktionsbauteils, Schaffung von Kühlkanälen oder Schmierkanälen innerhalb des Funktionsbauteils oder zumindest einer seiner Komponenten dienen.

Die erfindungsgemäße Generator-Getriebe-Einheit einer Windkraftanlage mit einem erfindungsgemäßen Funktionsbauteil dieser Generator-Getriebe-Einheit ist nunmehr, insbesondere axial, kompakt ausgeführt.

Dabei ist der Generator eine rotatorische dynamoelektrische Maschine, vorzugsweise eine Asynchronmaschine oder Synchronmaschine.

Die Kühlung dieses Generators kann durch Luft oder eine Kühlflüssigkeit erfolgen. In einer Ausführungsform ist ein Stator des Generators mit einer Ölkühlung versehen, während der Rotor eine Luftkühlung aufweist. Der Stator ist dabei durch ein Spaltrohr im Luftspalt der dynamoelektrischen Maschine vom Rotor abgeschottet. Mittels Ausnehmungen bzw. Kanälen im Blechpaket des Stators und/oder im Generatorflanschfortsatz ist eine Ölkühlung realisiert.

Das Funktionsbauteil weist in diesem Fall also Ausnehmungen bzw. Kanäle und Mittel zur Abdichtung des Spaltrohrs auf, z.B. Komponenten einer Labyrinthdichtung.

Das Getriebe ist insbesondere ein zwei- oder dreistufiges Planetenradgetriebe, das auf der der Generatorseite abgewandten Seite des Funktionsbauteils erstreckt. Auch dort kann eine Ölkühlung vorgesehen sein zu dem der Getriebeflanschfortsatz Ausnehmungen bzw. Kanäle bereitstellt.

Ein Mittenteil des Funktionsbauteils verbindet den Generatorflanschfortsatz und den Getriebeflanschfortsatz. Des Weiteren stellt das Mittenteil die mechanische Verbindung zu einem Stutzen her, der als Lagersitz geeignet ist, um eine Getriebeabtriebswelle, die mit dem Rotor drehfest und drehmomentenübertragend verbunden ist, zu lagern. Als Lager sind dabei beispielsweise ein doppelreihiges Lager in X-Anordnung oder Kegelrollenlager etc. vorgesehen.

Um eine Schmierung der Lageranordnung zu gewährleisten, sind im Funktionsbauteil, insbesondere im Mittenteil und/oder im Stutzen, Schmierkanäle vorgesehen.

Der Generator ist also fliegend gelagert.

Die Getriebeabtriebswelle ist mechanisch beispielsweise über eine lösbare Spannvorrichtung oder eine elektrisch isolierende Flanschverbindung mit einer Rotornabe der Rotortragstruktur drehmomentenübertragend verbunden.

Der Rotor weist eine Rotortragstruktur auf, an deren radialem Außenumfang ein Rotorblechpaket mit Permanentmagneten, einem Kurzschlusskäfigläufer oder einem Wicklungssystem angeordnet ist. Die Rotortragstruktur weist axiale Endscheiben auf, die mit einer Rotornabe, insbesondere speichenartig, verbunden sind. Das Blechpaket des Rotors ist durch Druckscheiben paketiert. Dies führt zu einem vergleichsweise geringen Gewicht des Rotors.

Das Funktionsbauteil, insbesondere das Mittenteil, weist zumindest einen Fortsatz auf. Dieser Forstsatz, der in den Generatorraum ragt, ist umfänglich verlaufend ausgeführt oder als mehrere abschnittsweise umfänglich verlaufende Fortsätze ausgeführt.

Im Generatorraum, im Bereich des Funktionsbauteils ist nunmehr eine Bremsenanordnung vorgesehen, die als Haltebremse oder Betriebsbremse der Windkraftanlage fungieren kann.

Bei einer Scheibenbremse ist die Bremsscheibe entweder ein Teil einer Endscheibe des Rotors oder an diesem angebracht. Die Bremsscheibe dient dabei gleichzeitig als Versteifungselement der Rotortragstruktur und damit des Rotors des Generators.

Ein Bremssattel weist Bremsbacken auf, die hydraulisch, elektrisch oder durch Druckluft betätigt werden und gegen die die Bremsscheibe gedrückt werden.

Die Betätigungsenergie wird dabei insbesondere über das Funktionsbauteil z.B. den Generatorflanschfortsatz und/oder den Getriebeflanschfortsatz bereitgestellt bzw. geführt. Die Betätigung der Bremsbacken erfolgt beispielsweise entweder durch eine übergeordnete Regelstruktur der Windkraftanlage oder manuell.

Die Bremsenanordnung weist nicht nur einen Bremssattel auf, sondern es sind an dem oder den Fortsätzen des Mittenteils mehrere Bremssättel angeordnet, die zusammen oder alternierend betätigbar sind.

Die Bremsbeläge wirken je nach Ausführung am äußeren Umfang der Bremsscheibe und/oder am inneren Umfang der Bremsscheibe.

Dadurch, dass die Rotortragstruktur speichenförmig ausgeführt ist, sind Wartungsarbeiten, z.B. Tausch der Bremsbeläge, an der Bremsanlage einfach durchführbar. Dies gelingt z.B. durch einen axialen Durchgriff zwischen den Speichen.

Da die Bremsbeläge kleinere Komponenten darstellen, sind diese besonders einfach axial über die Rotortragstruktur auszutauschen.

Die Bremsanordnung innerhalb des Rotorraumes kann auch als Trommelbremse ausgeführt sein. Dabei ist die Bremstrommel axial außen am Rotor, also ebenso auf der dem Funktionsbauteil zugewandten Endscheibe des Rotors, integriert. Die Bremsbeläge der Trommelbremse sind von der Bremstrommel aus gesehen radial nach innen gerichtet.

Alternativ sind weitere Bremsanordnungen bzw. Bremsausführungen möglich, wie magnetische Bremsen, Wirbelstrombremsen oder ähnliche, die sich in diesem Bereich des Rotorinnenraumes anordnen lassen.

Durch die erfindungsgemäße Funktionsbauteile und der damit erfindungsgemäßen Generator-Getriebe-Einheit ergibt sich eine Reduzierung der axialen Baulänge.

Aufgrund der fliegenden Lagerung des Generators, kann auf ein NDE-seitiges Lagerschild verzichtet werden.

Es ist somit auch keine Abdeckung der rotierenden Bremse notwendig, da diese innerhalb des nicht einfach zugänglichen Rotors angeordnet ist.

Aufgrund der Bremsanordnung an dem Funktionsbauteil ist ein kurzer, direkter Kraft-/Momentenfluss von der Bremsanordnung, insbesondere Bremssattel und Bremsscheibe zum Getriebe gewährleistet. Dies wird durch die Einstückigkeit des Funktionsbauteils unterstützt, indem keine geschraubten Übergangsstellen im Kraft- bzw. Momentenfluss vorhanden sind. Damit entfallen auch die Notwendigkeiten von reibschlüssigen Verbindungen.

Durch diesen einfachen kompakten Aufbau ergibt sich auch eine einfache Montage bzw. eine einfache Schnittstelle für ein Turner-Getriebe, das für eine Rotorblattmontage erforderlich ist.

Durch die erfindungsgemäße Mehrfachnutzung von Bauteilen, (z.B. Bremsscheibe als Versteifungselement, Funktionsbauteil unter anderem als gemeinsames Gussgehäuse mit Flansch für Generator und Getriebe, der als Kraftschluss für Bremskräfte und Momente dient etc.) wird eine kompakte Generator-Getriebe-Einheit einer Windkraftanlage geschaffen.

Erfindungsgemäß ist nunmehr eine einfache Abdichtung des Rotorinnenraums, beispielsweise über eine sogenannte Can, also eine Abdeckung möglich. Dies gestattet eine einfache Innenbelüftung des Generatorinnenraums oder auch nur des Rotorinnenraumes, falls der Stator des Generators über eine Ölkühlung verfügt. Diese Abdeckung ist insbesondere aus einem glasfaserverstärkten Kunststoff (GFK).

Da der Generator auf NDE-Seite nunmehr offen ausgeführt sein kann ergibt sich auch eine einfache Austauschbarkeit des Sonnenlagers durch den Generatorinnenraum.

Eine Windkraftanlage mit einer derartigen erfindungsgemäßen Generator-Getriebe-Einheit, die mit einem erfindungsgemäßen Funktionsbauteil ausgestattet ist, führt aufgrund der Mehrfachnutzung der Bauteile bzw. Komponenten zu einer äußerst kompakten und leistungsfähigen Windkraftanlage.

Durch eine Ölkühlung von Generator und/oder Getriebe und einer Luftkühlung, zumindest des Rotors, wird eine Windkraftanlage mit vergleichsweise hohem Wirkungsgrad bereitgestellt.

Die Erfindung sowie weitere Ausgestaltungen der Erfindung werden in den folgenden Ausführungsbeispielen prinzipiell dargestellt; darin zeigen:
FIG 1 eine prinzipiell dargestellte Windkraftanlage,
FIG 2 ein Funktionsteil, mit einem Generator,
FIG 3 ein weiteres Funktionsteil mit einem Generator.
FIG 4 ein prinzipieller Querschnitt des Generators

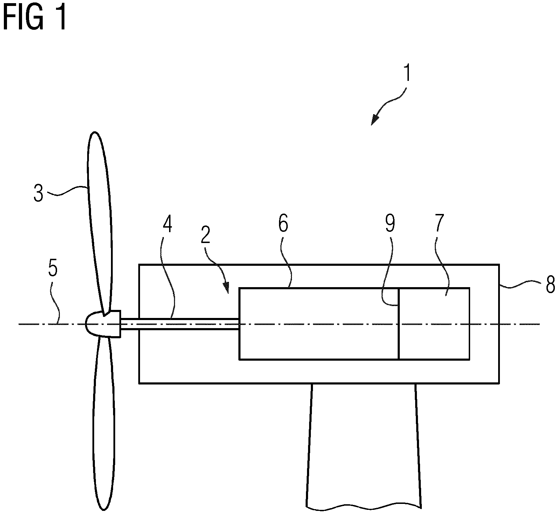

Die FIG 1 zeigt den oberen Teil einer Windkraftanlage 1, die Onshore oder Offshore aufgestellt sein kann. Im Energieerzeugungsmodus der Windkraftanlage 1 wird über einen Windrotor 3 die Windrotorwelle 4 um die Windrotorachse 5 in Drehung gesetzt. Über eine Getriebeeinheit 6 wird dabei ein Generator einer Generatoreinheit 7 angetrieben. Die Generatoreinheit 7 ist über einen nicht näher dargestellten Umrichter mit einem übergeordneten elektrischen Netz elektrisch gekoppelt. Generatoreinheit 7 und Getriebeeinheit 6 sind in einer Gondel 8 der Windkraftanlage 1 angeordnet. In der Gondel sind unter anderem auch Umrichter des Generators, Überwachungs- und Regelsysteme der Windkraftanlage 1 angeordnet. Des Weiteren sind in der Gondel 8 zumindest Komponenten, z.B. Wärmetauscher unterschiedlichster Kühlsysteme der Windkraftanlagenkomponenten, wie Generator, Getriebe etc. vorgesehen.

Des Weiteren sind in der Gondel 8 nicht näher dargestellte Drehmomentstützen der Generator-Getriebe-Einheit vorhanden, die Antriebs- und Bremsmomente aufnehmen.

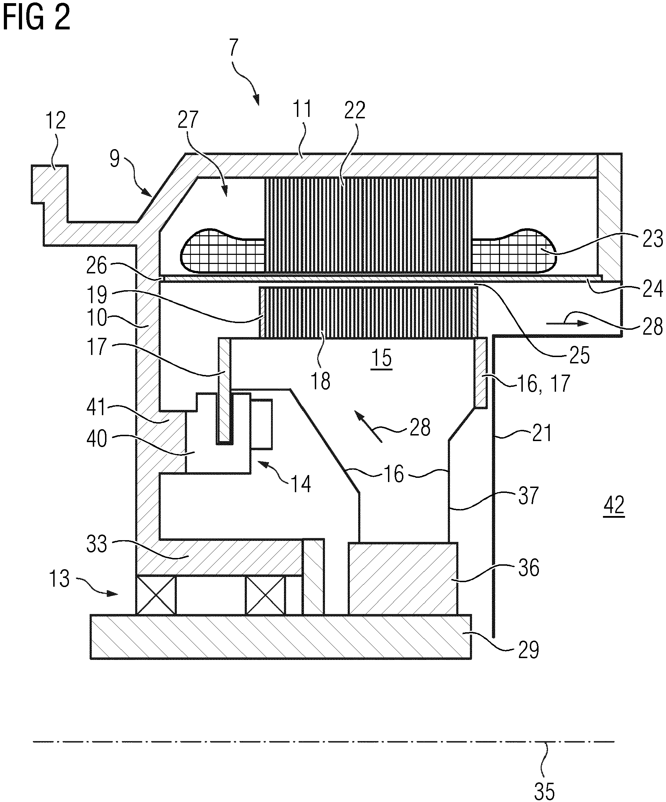

FIG 2 zeigt in einem prinzipiellen Teillängsschnitt des Generators mit seinem Generatorflanschfortsatz 11, dem Funktionsbauteil 9 und einem Getriebeflanschfortsatz 12.

Der Getriebeflanschfortsatz 12 nimmt zumindest Komponenten eines Getriebes, insbesondere eines zwei- oder dreistufigen Planetenradgetriebes auf, wie z.B. ein ortsfestes Hohlrad.

Aus der Getriebeeinheit 6 ragt axial eine Getriebeabtriebswelle 34. Diese rotiert um eine Achse 35, die entweder in axialer Flucht der Windrotorachse 5 verläuft oder zu dieser achsparallel ausgerichtet ist.

Die Getriebeabtriebswelle 34 ist mit einem Rotor 15 des Generators über eine Rotornabe 36 drehfest und drehmomentenübertragend verbunden.

Die Getriebeabtriebswelle 34 ist in einer Lageranordnung 13 gelagert, die in einem Stutzen 33 des Funktionsbauteils 9 positioniert ist. Schmiermittelkanäle können dabei innerhalb des Stutzens und/oder des Funktionsbauteils vorgesehen sein.

Das Drehmoment im Energieerzeugungsmodus, aber auch das Bremsmoment wird über die Welle-Nabe-Verbindung zwischen der Getriebeabtriebswelle 34 und der Rotornabe 36 übertragen. Die Welle-Nabe-Verbindung kann dabei grundsätzlich als form- oder kraftschlüssige Verbindungen ausgeführt sein. Aufgrund der anstehenden Beanspruchungen, wie große und/oder wechselseitige Beanspruchungen, werden vorzugsweise Spannsätze oder Pressverbände eingesetzt.

Der Rotor 15 weist eine Rotortragstruktur 16 auf, die die Rotornabe 36, axiale Endscheiben 17 und Versteifungselemente, wie Speichen 37 beinhaltet. Die als Bremsscheibe 39 zusätzlich ausgeführte Endscheibe 17 wirkt zusätzlich versteifend auf die Rotortragstruktur 16.

Vorzugsweise ist die Rotortragstruktur 16, räumlich betrachtet, schalen-förmig ausgeführt, um einem Stutzen 33 einer Lageranordnung 13 und/oder einer Bremsenanordnung 14 Bauraum zu bieten. Die Öffnung der "Schale" weist dabei zum Funktionsbauteil 9.

Umfänglich auf der Rotortragstruktur 16 ist ein Rotorblechpaket 18 angeordnet, das durch Druckscheiben 19 paketiert ist. Das Rotorblechpaket 18 weist Permanentmagnete 20 auf, die sich in im Wesentlichen axial verlaufenden Ausnehmungen befinden. Diese Permanentmagnete 20 können auch an der Oberfläche des Rotorblechpakets 18 angeordnet sein.

Ebenso können die Permanentmagnete 20 unter Berücksichtigung einer effizienten Magnetflussführung auch V-förmig im Rotorblechpaket 18 angeordnet sein.

Die dem Funktionsbauteil 9 zugewandte Endscheibe 17 ist in dieser Ausführung zumindest abschnittsweise als Bremsscheibe 39 ausgeführt. Im Betrieb oder bei Wartungsarbeiten oder Montagearbeiten läuft dieser Teil der Endscheibe 17 zwischen den Bremssätteln 40, die bei einer Bremsung ihre Bremsbacken gegen die Bremsscheibe 39 drücken.

Die Bremssättel sind an einem Fortsatz 41 des Funktionsbauteils 9 befestigt. Der Fortsatz 41 ist entweder als Ring, vorzugsweise am Mittenteil 10, vorgesehen oder es sind mehrere auf gleichem Radius verlaufende Fortsätze am Mittenteil 10 vorgesehen. Damit können entweder eine oder mehrere Bremsanordnungen 14 in diesem Bereich angeordnet werden. Dies kann der Bremskraftsteigerung und/oder der Redundanz dienen.

Die Bremsanordnungen 14 sind in das übergeordnete Regelkonzept der Windkraftanlage 1 eingebunden. Damit kann die Bremsanordnungen 14 Haltefunktionen erfüllen als auch Betriebsbremsungen oder Notfallbremsungen durchführen.

Über die NDE-Seite 42 des Rotors 15 kann nunmehr einfach eine Luftkühlung 28 realisiert werden. Dabei wird beispielsweise Luft im Bereich der Rotornabe 36 angesaugt und durch die Rotortragstruktur 16 auf die dem Funktionsbauteil 9 zugewandten Seite des Rotors 15 geführt. Über den Luftspalt 25 und Kühlkanäle 31 im oder auf dem Rotor 15 kann dann die erwärmte Luft axial wieder aus dem Rotor 15 auf der NDE-Seite 42 abgegeben werden. Der Luftaustritt ist also radial weiter außen als der Lufteinlass.

Der Luftstrom könnte aber auch umgedreht werden. Dies hätte den Vorteil, dass der Bremsabrieb der Bremsenanordnung 14 nicht in den Bereich des Luftspalts 25 gelangt.

Der Luftstrom wird entweder durch einen Fremdlüfter und/oder durch entsprechende Gestaltung der Speichen 37 generiert.

Der Stator 22 des Generators weist ein Blechpaket auf, in dem ein Wicklungssystem 30 angeordnet ist, das an den Stirnseiten des Stators 22 Wickelköpfe 23 ausbildet. Der Stator 22 ist zumindest auf der Seite des Luftspaltes 25 durch ein Spaltrohr 24 abgedichtet. Damit ist eine Flüssigkeitskühlung des Stators 22, insbesondere eine Ölkühlung 27 vorgesehen. Auf der dem Funktionsbauteil 9 zugewandten Seite weist das Funktionsbauteil 9 bzw. das Mittenteil 10 Mittel zur Positionierung und/oder einer Spaltrohrdichtung 26 auf. Im bzw. am Blechpaket des Stators 22 und an der dem Stator 22 zugewandten Seite des Generatorflanschfortsatzes 11 sind Kühlkanäle 32 des Stators 22 und/oder auch Verteilungskanäle vorgesehen. Diese können auch innerhalb des Generatorflanschfortsatzes 11 verlaufen.

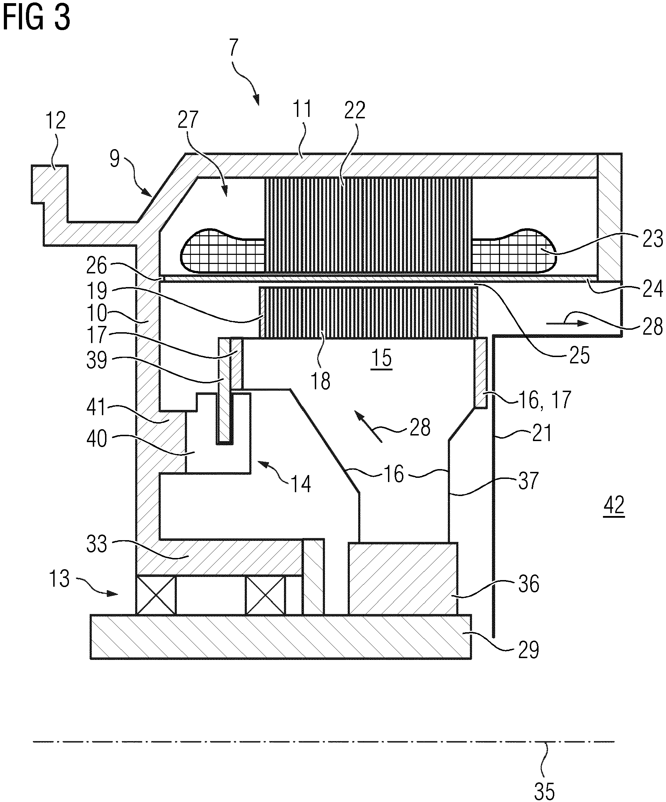

FIG 3 zeigt einen prinzipiellen Teillängsschnitt ähnlich FIG 2. Dort wird auch der Generator mit seinem Generatorflanschfortsatz 11, dem Funktionsbauteil 9 und einem Getriebeflanschfortsatz 12 gezeigt.

Der Getriebeflanschfortsatz 12 nimmt zumindest Komponenten eines Getriebes, insbesondere eines zwei- oder dreistufigen Planetenradgetriebes auf, wie z.B. ein ortsfestes Hohlrad.

Aus der Getriebeeinheit 6 ragt axial eine Getriebeabtriebswelle 34. Diese rotiert um eine Achse 35, die entweder in axialer Flucht der Windrotorachse 5 verläuft oder zu dieser achsparallel ausgerichtet ist.

Die Getriebeabtriebswelle 34 ist mit einem Rotor 15 des Generators über eine Rotornabe 36 drehfest und drehmomentenübertragend verbunden.

Die Getriebeabtriebswelle 34 ist in einer Lageranordnung 13 gelagert, die in einem Stutzen 33 des Funktionsbauteils 9 positioniert ist. Schmiermittelkanäle können dabei innerhalb des Stutzens und/oder des Funktionsbauteils vorgesehen sein.

Das Drehmoment im Energieerzeugungsmodus, aber auch das Bremsmoment wird über die Welle-Nabe-Verbindung zwischen der Getriebeabtriebswelle 34 und der Rotornabe 36 übertragen.

Die Welle-Nabe-Verbindung kann dabei grundsätzlich als form- oder kraftschlüssige Verbindungen ausgeführt sein. Aufgrund der anstehenden Beanspruchungen, wie große und/oder wechselseitige Beanspruchungen, werden vorzugsweise Spannsätze oder Pressverbände eingesetzt.

Der Rotor 15 weist eine Rotortragstruktur 16 auf, die die Rotornabe 36, axiale Endscheiben 17 und Versteifungselemente, wie z.B. Speichen 37 aufweist. Die mit einer Bremsscheibe 39 versehene Endscheibe 17 wirkt zusätzlich versteifend auf die Rotortragstruktur 16.

Vorzugsweise ist die Rotortragstruktur 16, räumlich betrachtet, schalen-förmig ausgeführt, um einem Stutzen 33 einer Lageranordnung 13 und/oder einer Bremsenanordnung 14 Bauraum zu bieten. Die Öffnung der "Schale" weist dabei zum Funktionsbauteil 9.

Umfänglich auf der Rotortragstruktur 16 ist ein Rotorblechpaket 18 angeordnet, das durch Druckscheiben 19 paketiert ist. Das Rotorblechpaket 18 weist Permanentmagnete 20 auf, die sich in im Wesentlichen axial verlaufenden Ausnehmungen befinden. Diese Permanentmagnete 20 können auch an der Oberfläche des Rotorblechpaket 18 angeordnet sein.

Ebenso können die Permanentmagnete 20 unter Berücksichtigung einer effizienten Magnetflussführung auch V-förmig im Rotorblechpaket 18 angeordnet sein.

An der dem Funktionsbauteil 9 zugewandte Endscheibe 17 ist in dieser Ausführung eine Bremsscheibe 39 an der Endscheibe 17 angebracht. Im Betrieb oder bei Wartungsarbeiten oder Montagearbeiten läuft die Bremsscheibe 39 zwischen den Bremssätteln 40, die bei einer Bremsung ihre Bremsbacken gegen die Bremsscheibe 39 drücken.

Die Bremssättel sind an einem Fortsatz 41 des Funktionsbauteils 9 befestigt. Der Fortsatz 41 ist entweder als Ring, vorzugsweise am Mittenteil 10, vorgesehen, oder es sind mehrere auf gleichem Radius verlaufende Fortsätze am Mittenteil 10 vorgesehen. Damit können entweder eine oder mehrere Bremsanordnungen 14 in diesem Bereich angeordnet werden. Dies kann der Bremskraftsteigerung und/oder der Redundanz dienen.

Die Bremsanordnungen 14 sind in das übergeordnete Regelkonzept der Windkraftanlage 1 eingebunden. Damit kann die Bremsanordnungen 14 Haltefunktionen und Betriebsbremsungen, aber auch Notfallbremsungen durchführen.

Über die NDE-Seite 42 des Rotors 15 kann nunmehr einfach eine Luftkühlung 28 realisiert werden. Dabei wird beispielsweise Luft im Bereich der Rotornabe 36 angesaugt und durch die Rotortragstruktur 16, auf die dem Funktionsbauteil 9 zugewandten Seite, des Rotors 15 geführt. Über den Luftspalt 25 und Kühlkanäle 31 im oder auf dem Rotor 15 kann die erwärmte Luft wieder aus dem Rotor 15 auf die NDE-Seite 42 radial weiter außen abgegeben werden.

Der Luftstrom könnte aber auch umgedreht werden. Dies hätte den Vorteil, dass der Bremsabrieb nicht in den Bereich des Luftspalts 25 gelangt.

Der Luftstrom wird entweder durch einen Fremdlüfter und/oder durch entsprechende Gestaltung der Speichen 37 generiert.

Der Stator 22 des Generators weist ein Blechpaket auf, in dem ein Wicklungssystem 30 angeordnet ist, das an den Stirnseiten des Stators 22 Wickelköpfe 23 ausbildet. Der Stator 22 ist zumindest auf der Seite des Luftspaltes 25 durch ein Spaltrohr 24 abgedichtet. Damit ist eine Flüssigkeitskühlung des Stators 22, insbesondere eine Ölkühlung 27, vorgesehen. Auf der dem Funktionsbauteil 9 zugewandten Seite weist das Funktionsbauteil 9 bzw. das Mittenteil 10 Mittel zur Positionierung und/oder einer Spaltrohrdichtung 26 auf. Im bzw. am Blechpaket des Stators 22 und an der dem Stator 22 zugewandten Seite des Generatorflanschfortsatz 11 sind Kühlkanäle 32 des Stator 22 oder auch Verteilungskanäle vorgesehen. Diese können auch innerhalb des Generatorflanschfortsatzes 11 verlaufen.

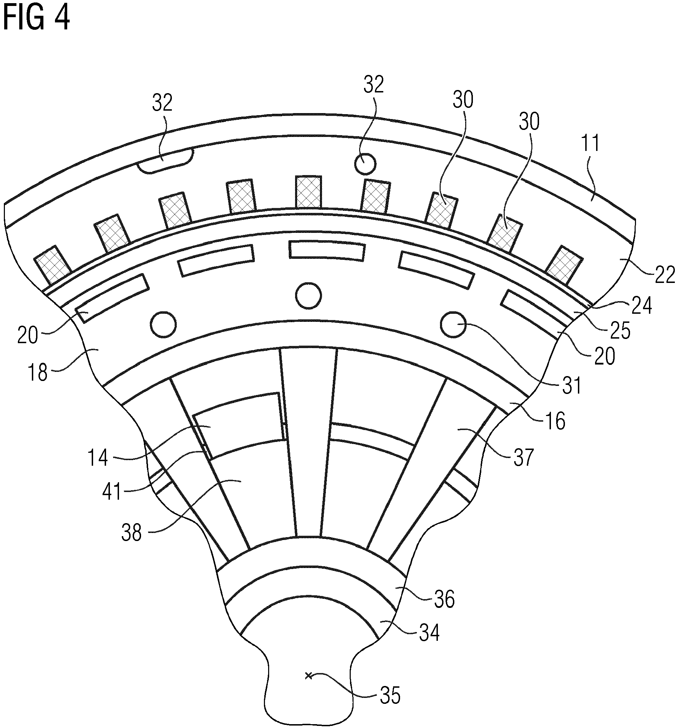

FIG 4 zeigt einen prinzipiellen Teilquerschnitt des Generators aus Sicht der NDE-Seite 42.

Die Getriebeabtriebswelle 34 - hier hohl ausgeführt - ist mit einem Rotor 15 des Generators über die Rotornabe 36 drehfest und drehmomentenübertragend verbunden.

Die Rotornabe 36 ist mittels Speichen 37 mit den axialen Endscheiben 17 verbunden und bildet eine starre, aber dennoch leichte Rotortragstruktur 16, die Speichenzwischenräume 38 aufweist. Diese Rotortragstruktur 16 ermöglicht an der oder den Bremsanordnungen 14 Wartungsarbeiten vereinfacht durchzuführen. Damit sind z.B. Wechsel der Bremsbeläge über die axialen Speichenzwischenräume 38 möglich.

Das Rotorblechpaket 18 ist auf der Rotortragstruktur 16 drehfest angeordnet. Durch elektromagnetische Wechselwirkung der Permanentmagnete 20 mit dem Wicklungssystem 30 des Generators wird elektrische Energie erzeugt. Die Speichen 37 sind, um eine Luftkühlung 28 des Rotors 15 zu realisieren, derart gestaltet, dass entweder eine Sog- oder Druckwirkung bei Drehung des Rotors 15 generiert wird.

Grundsätzlich ist durch den beschriebenen Aufbau der erfindungsgemäßen Generator-Getriebe-Einheit mit dem erfindungsgemäßen Funktionsbauteils 9 eine kompakte Ausführung gewährleistet, insbesondere in axialer Richtung. Der Generator ist fliegend gelagert, so dass auf der NDE-Seite 42 kein Lagerschild vorzusehen ist. Es kann lediglich eine Abdeckung 21 vorgesehen werden, die dementsprechende Luft-Aus- und Luft-Einlassöffnungen aufweist. Diese Abdeckung ist vorzugsweise aus GFK.

Die Betätigungsenergie der jeweiligen Bremsanordnung 14 erfolgt dabei, insbesondere über das Funktionsbauteil 9, z.B. den Generatorflanschfortsatz 11 und/oder den Getriebeflanschfortsatz 12. Diese Bremse wird entweder durch eine übergeordnete Regelstruktur oder manuell ausgelöst.

Die rotierende Bremse muss aufgrund ihres Einbauortes nicht zusätzlich abgedeckt werden. Jedoch kann eine Abdeckung sinnvoll sein, um den Bremsabrieb vom Rotorinnenraum fernzuhalten.

Der Rotorinnenraum lässt sich auch vergleichsweise einfach durch eine Abdeckung 21 abschotten und bildet somit eine Can.

In einer Ausführung weist der Stator 22 und die Getriebeeinheit 6 eine Ölkühlung auf. Dabei sind getrennte Kühlkreisläufe aber auch ein gemeinsamer Kühlkreislauf denkbar. Der Rotor des Generators wird dabei mittels Luft gekühlt.

Dabei können die Blechpakete von Stator 22 und Rotor 15 axial durchgängig gestapelt sein. Es sind aber auch Blechpakete umsetzbar, die sich axial aus mehreren Teilblechpaketen zusammensetzen, um zusätzliche radiale Kühlspalte zu schaffen.

Als Generator ist dabei eine rotatorische dynamoelektrische Maschine vorgesehen, vorzugsweise eine Asynchronmaschine oder Synchronmaschine. Dabei sind Polpaarzahlen von zwei bis dreißig vorstellbar.

Dabei werden Übersetzungsverhältnisse zwischen Windrotorwelle 4 und Rotor 15 des Generators je nach Ausführung von 20 bis 200 angestrebt.

Um einen kompakten Antriebsstrang, also Generator-Getriebe-Einheit der Windkraftanlage 1 zu erhalten, können die bisher beschriebenen und gezeigten Merkmale der Erfindung auch in anderen beliebigen Kombinationen zusammengeführt werden.

## Patentansprüche

1. Funktionsbauteil (9) einer Generator-Getriebe-Einheit, insbesondere einer Windkraftanlage (1) das einen Generatorflanschfortsatz (11) und einen Getriebeflanschfortsatz (12) aufweist, die über ein Mittenteil (10) verbunden sind, wobei das Mittenteil (10) außerdem einen Stutzen (33) aufweist, der zumindest als Lagersitz geeignet ist, wobei das Funktionsbauteil (9), insbesondere das Mittenteil (10) zumindest einen Fortsatz (41) aufweist, der zur Aufnahme von zumindest Teilen einer Bremsanordnung (14) geeignet ist.

2. Funktionsbauteil (9) nach Anspruch 1, **dadurch gekennzeichnet, dass** an und/oder im Funktionsbauteil (9) Versteifungselemente und/oder Kühlelemente, wie Durchlässe oder Rippen, vorgesehen sind.

3. Funktionsbauteil (9) nach Anspruch 2, **dadurch gekennzeichnet, dass** im Mittenteil (10) und/oder Stutzen (33), Schmierkanäle vorgesehen sind.

4. Funktionsbauteil (9) nach einem der vorhergehenden Ansprüche, **dadurch gekennzeichnet, dass** das Funktionsbauteil (9) einstückig ausgeführt ist.

5. Funktionsbauteil (9) nach einem der vorhergehenden Ansprüche, **dadurch gekennzeichnet, dass** das Funktionsbauteil (9) gegossen oder aus Vollmaterial spanabhebend hergestellt ist.

6. Funktionsbauteil (9) nach einem der vorhergehenden Ansprüche, **dadurch gekennzeichnet, dass** zumindest einige Komponenten, wie Generatorflanschfortsatz (11), Getriebeflanschfortsatz (12), Stutzen (33) und/oder Fortsatz (41) mittels Additive Manufactoring zumindest abschnittsweise stoffschlüssig ergänzt sind.

7. Generator-Getriebe-Einheit einer Windkraftanlage (1) mit einem Funktionsbauteil (9) dieser Generator-Getriebe-Einheit nach Anspruch 1,
wobei der Generator einen Stator (22) und einen Rotor (15) aufweist,
wobei das Getriebe als zwei- oder dreistufiges Planetenradgetriebe ausgebildet ist,
wobei das Funktionsbauteil (9), einen Generatorflanschfortsatz (11) und einen Getriebeflanschfortsatz (12) aufweist, die über ein Mittenteil (10) verbunden sind,
wobei das Mittenteil (10) außerdem einen Stutzen (33) aufweist, der zumindest als Lagersitz geeignet ist,
wobei das Funktionsbauteil (9), insbesondere das Mittenteil (10) zumindest einen Fortsatz (41) aufweist, an dem zumindest Teile einer Bremsanordnung (14) befestigbar sind,
wobei sich Generatorflanschfortsatz (11) und Getriebeflanschfortsatz (12) in axial unterschiedliche Richtungen erstrecken,
wobei der Generatorflanschfortsatz (11) zumindest einen Abschnitt eines Gehäuses des Generators bildet,
wobei der Getriebeflanschfortsatz (12) zumindest einen Abschnitt eines Gehäuses des Getriebes bildet,
wobei im Stutzen (33) eine Getriebeabtriebswelle (34) gelagert ist, die mit dem Rotor (15) des Generators drehmomentenübertragend verbunden ist.

8. Generator-Getriebe-Einheit einer Windkraftanlage (1) nach Anspruch 7, **dadurch gekennzeichnet, dass** der Rotor (15) eine Rotortragstruktur (16) aufweist, an deren Stirnseiten jeweils eine Endscheibe (17) vorgesehen ist.

9. Generator-Getriebe-Einheit einer Windkraftanlage (1) nach Anspruch 8, **dadurch gekennzeichnet, dass** zumindest der zu dem Funktionsbauteil (9) weisende Abschnitt der Rotortragstruktur (16) zumindest Teile der Bremsanordnung (14) aufweist.

10. Generator-Getriebe-Einheit einer Windkraftanlage (1) nach Anspruch 9, **dadurch gekennzeichnet, dass** die dem Funktionsbauteil (9) weisende Endscheibe (17) als Bremsscheibe (39) ausgebildet ist oder eine Bremsscheibe (39) trägt.

11. Generator-Getriebe-Einheit einer Windkraftanlage (1) nach einem der Ansprüche 7 bis 10, **dadurch gekennzeichnet, dass** an dem Fortsatz (41) des Funktionsbauteils (9) jeweils eine Bremsanordnung (14) vorgesehen ist, so dass sich umfänglich betrachtet, im Bereich der zu dem Funktionsbauteil (9) weisenden Abschnitt der Rotortragstruktur (16) eine oder mehrere Bremsanordnungen (14) befinden.

12. Windkraftanlage mit einer Generator-Getriebe-Einheit nach Anspruch 7 und mit einem Funktionsbauteil nach Anspruch 1.
